# EUROPEAN PATENT SPECIFICATION

(11) **EP 1 858 271 B1**
(45) Date of publication and mention of the grant of the patent: **31.07.2019**
(21) Application number: 06728816.7
(22) Date of filing: 09.03.2006
(51) Int. Cl.: H04W 36/30, H04B 7/12, H04B 17/00

(54) **DIFFERENT FREQUENCY MONITORING APPARATUS AND METHOD IN MOBILE COMMUNICATION SYSTEM**
VORRICHTUNG UND VERFAHREN ZUR ÜBERWACHUNG UNTERSCHIEDLICHER FREQUENZEN IN EINEM MOBILEN KOMMUNIKATIONSSYSTEM
APPAREIL DE SURVEILLANCE DE DIFFERENTES FREQUENCES ET PROCÉDÉ DANS UN SYSTÈME DE COMMUNICATION MOBILE

(30) Priority: 10.03.2005 JP 2005067967
(43) Date of publication of application: 21.11.2007
(73) Proprietor: NEC Corporation, Minato-ku Tokyo 108-8001 (JP)
(72) Inventor: ARIMITSU, Kazuhiro, Tokyo, 1088001 (JP)
(74) Representative: Vossius & Partner Patentanwälte Rechtsanwälte mbB
(86) International application number: PCT/JP2006/304549
(87) International publication number: WO 2006/095797

(56) References cited:
- EP-A2- 0 881 852
- EP-A2- 0 948 231
- WO-A1-2004/015901
- JP-A- 2000 050 336
- JP-A- 2003 338 787
- JP-A- 2004 235 800
- US-B1- 6 845 238

## Description

### TECHNICAL FIELD

The present invention relates to a frequency monitoring method in a mobile communication system and a corresponding mobile communication system to efficiently switch frequencies of communication between a base station and a mobile station.

### BACKGROUND ART

In the mobile communication system such as CDMA mobile communication system, a plurality of base stations are arranged with the service area (cell) of the base station close to each other, and the mobile station switches the base station which is to be the other end of the connection while moving to continue the communication. A method of searching for the presence of the base station which is to be the other end of the mobile station is disclosed in patent document 1 and patent document 2.

In the CDMA mobile communication system, communication is performed by switching the code and the frequency for every service area. Therefore, it is required to activate the different frequency monitoring function to maintain the communication quality in the CDMA mobile communication system. That is, it is required to activate the different frequency monitoring function and switch the communication to the base station of better service area to maintain the communication quality.

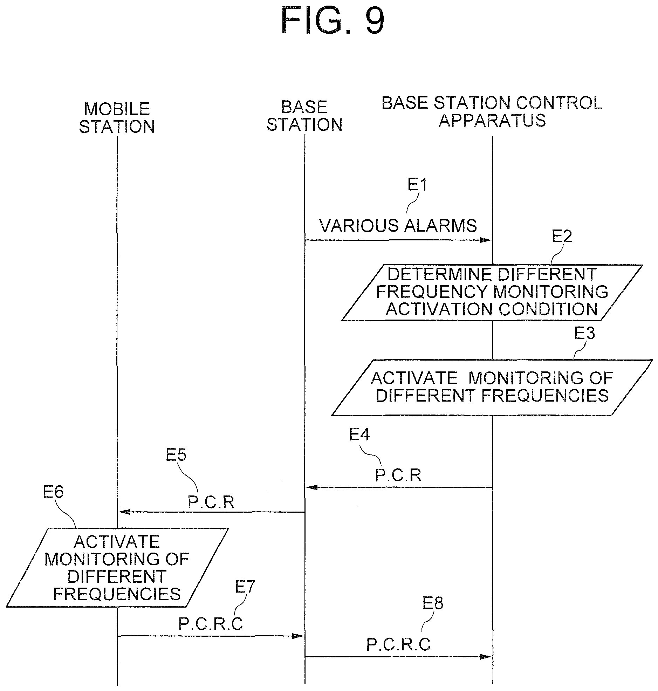

A method of maintaining the communication quality in the conventional CDMA mobile communication system will be described based on Fig. 9. In step E1 of Fig. 9, the base station monitors the radio wave condition at the mobile station, and when detecting the necessity of switching the communication frequency, that is, monitoring of different frequencies, first transmits various alarms to activate the monitoring of different frequencies from the base station to a base station control apparatus. When receiving the alarms from the base station, the base station control apparatus judges the activation condition for the different frequency monitoring in step E2 of Fig. 9. If the condition is met, the base station control apparatus determines the activation of monitoring of difference frequencies, and transmits a message PCR indicating the request for activation of monitoring of different frequencies to the mobile station via the base station in step E4 and step E5 of Fig. 9. The mobile station then activates the monitoring of different frequencies in step E6 of Fig. 9, switches the communication frequency, that is, executes hand-off, and transmits the message PCR to the base station control apparatus via the base station to notify the execution of hand-off to the base station control apparatus in step E7 and step E8 of Fig. 9.
Patent document 1: Japanese Laid-Open Patent Publication No. 9-284827
Patent document 2: Japanese Laid-Open Patent Publication No. 2000-184428

EP 0 881 852 A2 relates to a CDMA cellular network where base stations share a common frequency and a first base station has a second frequency in addition to the common frequency, a mobile station receives a pilot signal from the first base station over the second frequency when it has established a connection to it, and transmits a first handoff request when the field strength of the pilot signal drops below a predefined threshold.

EP1553715 (A1) relates to a method for controlling inter-frequency hard handoffs by using user equipment(UE) event-triggered reporting mode in a WCDMA system, being applicable to geographical cells covered by multiple frequency points. The radio network controller (RNC), after receiving reported results from the UE, performs the decision and execution according to the specific events.

### DISCLOSURE OF THE INVENTION

However, since monitoring of different frequencies is not executed on the basis of the communication quality on the mobile station side in the conventional different frequency monitoring activation method shown in Fig. 9, the monitoring of different frequencies cannot be executed on the mobile station side even if the communication quality on the mobile station side is degrading.

Furthermore, since the monitoring of different frequencies is activated according to the state of not the mobile station but the base station, unnecessary monitoring of different frequencies cannot be reduced.

It is an object of the present invention to provide a frequency monitoring method according to independent claim 1 and a corresponding mobile communication system according to independent claim 2.

According to the present invention, the monitoring of different frequencies can be activated corresponding to the reception state at the mobile station since monitoring of different frequencies starts based on the communication quality information measured in the mobile station, as described above.

Furthermore, unnecessary monitoring of different frequencies can be reduced since determination of communication frequency switching is made in the mobile station, and the monitoring of different frequencies starts based on the determination. Moreover, the monitoring of different frequencies can be performed corresponding to the reception state at the mobile station, by making the event judgment on the mobile station side based on the communication quality information, and starting the monitoring of different frequencies based on the event information.

The case of call disconnection can be reduced since monitoring of different frequencies is activated based on the information of the mobile station.

### BRIEF DESCRIPTION OF THE DRAWINGS

Fig. 1 is a view showing a case where a different frequency monitoring apparatus according to an embodiment of the present invention is applied to a CDMA mobile communication system;
Fig. 2 is a block diagram showing a configuration of a mobile station in the different frequency monitoring apparatus according to an example useful for understanding the present invention;
Fig. 3 is a block diagram showing a configuration of a base station control apparatus in the different frequency monitoring apparatus according to an example useful for understanding the invention the present invention;
Fig. 4 is a sequence chart showing the operation process of the mobile station, the base station, and the base station control apparatus according to the embodiment of the present invention;
Fig. 5 is a flow chart describing the operation of the different frequency monitoring apparatus according to an example useful for understanding the present invention;
Fig. 6 is a block diagram showing a configuration of a mobile station in a different frequency monitoring apparatus according to an embodiment of the present invention;
Fig. 7 is a block diagram showing a configuration of a base station control apparatus in the different frequency monitoring apparatus according to an embodiment of the present invention;
Fig. 8 is a flow chart describing the operation of the different frequency monitoring apparatus according to an embodiment of the present invention; and
Fig. 9 is a sequence chart showing the operation process of the mobile station, the base station, and the base station control apparatus in a different frequency activation monitoring method of the related art.

### BEST MODE FOR CARRYING OUT THE INVENTION

The embodiments of the present invention will be described in detail below.

An example where the mobile communication system according to the present invention is applied to the CDMA mobile communication system will be described as the first embodiment.

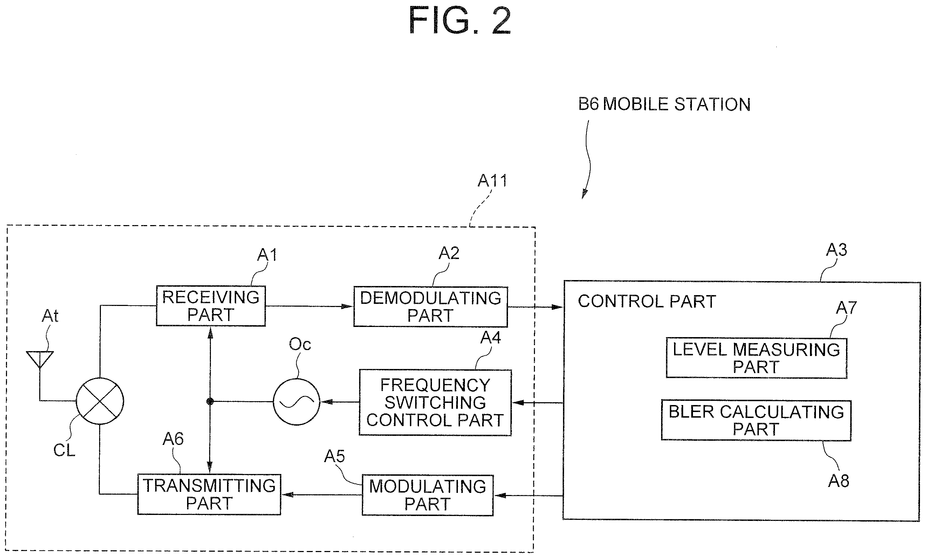

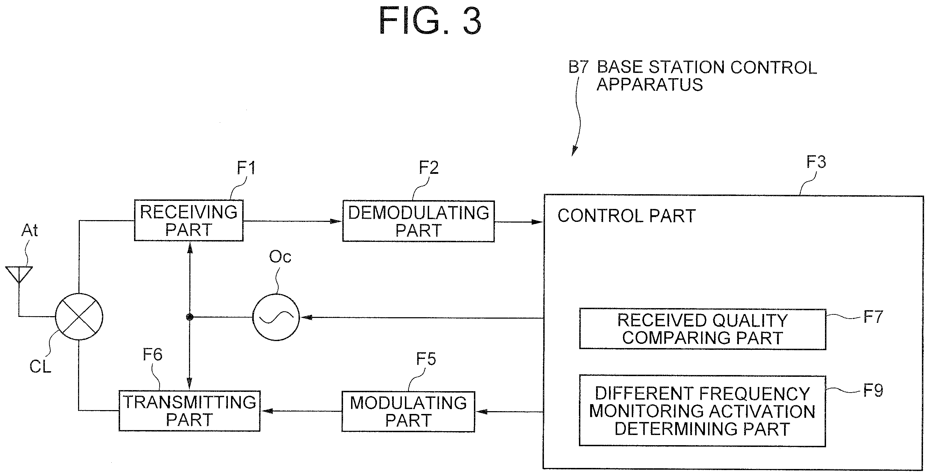

The mobile communication system according to an example useful for understanding the present invention includes a mobile station B6 that switches the frequencies between the base stations to perform communication, and a base station control apparatus B7 that controls the base stations and the mobile station B6, as shown in Fig. 2 and Fig. 3. The base station control apparatus B7 directly controls the base stations and indirectly controls the mobile station B6 by way of the base station.

Furthermore, the mobile station B6 includes a control part A3 that measures the communication quality information as shown in Fig. 2. The base station control apparatus B7 includes a control part F3 that determines frequency switching based on the quality information measured by the mobile station.

In addition to the function of measuring the communication quality information, the control part A3 according to the example is adapted to determine frequency switching based on the quality information, as shown in Fig. 2. The mobile station B6 includes a transmission and reception part A11 that performs communication with base stations under the control of the control part A3.

As shown in Fig. 2, the transmission and reception part A11 includes an antenna At, a circulator CL, a receiving part A1, a demodulating part A2, a transmitting part A6, a modulating part A5, a local oscillator Oc, and a frequency switching control part A4.

The antenna At is adapted to transmit and receive radio wave of CDMA scheme. The circulator CL is adapted to transmit the reception signal received through the antenna At to the receiving part A1, and emit the transmission signal from the transmitting part A6 as radio wave. The receiving part A1 is adapted to down convert the frequency of the reception signal from the circulator CL. The demodulating part A2 is adapted to demodulate the down converted reception signal. The modulating part A5 is adapted to modulate the signal from the control part A3 and generate a transmission signal. The transmitting part A6 is adapted to up convert the frequency of the modulated transmission signal, and emit the transmission signal from the antenna At via the circulator CL.

The frequency switching control part A4 is adapted to output a frequency switching signal to the local oscillator Oc when receiving control command from the control part A3. The local oscillator Oc is adapted to switch the frequency of the LOCAL signal used in transmission and reception performed by the receiving part A1 and the transmitting part A6 when receiving the frequency switching signal.

The control part A3 includes a level measuring part A7 and a BLER calculating part A8 as shown in Fig. 2, and is configured to measure the communication quality information based on the processes by the level measuring part A7 and the BLER calculating part A8, and judge frequency switching of the communication performed between the mobile station B6 and the base station based on the quality information.

The communication quality information includes information on field intensity and reception quality level of the radio wave received through the antenna At of the mobile station B6. The information on the field intensity includes information on reception signal power (RSCP; Reception signal Code Power), reception signal strength indicator (RSSI), and loss (Path Loss) of received electric field by path. The information on reception quality level contains information on signal energy per chip to noise power density ratio in the band (Ec/NO; received energy per chip divided by the power density in the band), inferior quality (BLER; block error ratio), etc. The communication quality information described above is obtained mainly during telephone call, but is not limited thereto. The communication quality information in a cell monitoring state may also be included. The cell monitoring state is a state in which the mobile station monitors the surrounding cells (service area), where the field intensity and the reception quality level (excluding BLER) are obtained when monitoring, and such information are used as quality information.

The level measuring part A7 is adapted to measure the field intensity, compare the level of field intensity with a threshold value, and determine that communication quality is degrading when the level of field intensity is lower than the threshold value. The threshold value is a value that is standardized to maintain a satisfactory communication quality by a public institution.

The BLER calculating part A8 is adapted to measure the reception quality level, compare the extent of the reception quality level with a threshold value, and determine that communication quality is degrading when the extent of the reception quality level is lower the threshold value. The threshold value is a value that is standardized to maintain a satisfactory communication quality by a public institution.

The control part A3 is configured by a computer. That is, the control part A3 is configured to read the control program written in a memory of the computer with a CPU of the computer, and execute the functions of the level measuring part A7 and the BLER calculating part A8 with the CPU. The control part A3 also has a function of comprehensively controlling the execution of overall processes performed in the mobile station B6, in addition to the function of the level measuring part A7 and the BLER calculating part A8.

For performing the communication with the base station, the base station control apparatus B7 includes an antenna At, a circulator CL, a receiving part F1, a demodulating part F2, a modulating part F5, a transmitting part F6, and a local oscillator Oc, in addition to the control part F3, as shown in Fig. 3.

The antenna At is adapted to receive radio wave transmitted from base stations B1 to B4, and emitting the radio wave from the base station control apparatus B7 to the base stations B1 to B4. The circulator CL is adapted to transmit the reception signal received through the antenna At to the receiving part F1, and emit the transmission signal from the transmitting part F6 as radio wave. The receiving part F1 is adapted to down convert the frequency of the reception signal from the circulator CL. The demodulating part F2 is adapted to demodulate the down converted reception signal. The modulating part F5 is adapted to modulate the signal from the control part F3 and generate a transmission signal. The transmitting part A6 is adapted to up convert the frequency of the modulated transmission signal, and emit the transmission signal from the antenna At via the circulator CL.

The local oscillator Oc is adapted to switch the frequency of the LOCAL signal used in transmission and reception performed between the receiving part F1 and the transmitting part F6 when receiving the frequency switching signal from the control part F3.

As shown in Fig. 3, the control part F3 includes a reception quality comparing part F7 and a different frequency monitoring activation determining part F9, and is configured to determine frequency switching of the communication performed between the mobile station B6 and the base station based on the communication quality information measured by the mobile station B6 on the basis of the processes in the reception quality comparing part F7 and the different frequency monitoring activation determining part F9.

The reception quality comparing part F7 extracts the communication quality information measured by the mobile station from the reception signal demodulated in the demodulating part F2, compares the quality information and the threshold value, and outputs the comparison result to the different frequency monitoring activation determining part F9. When receiving the determination result from the reception quality comparing part F7, the different frequency monitoring activation determining part F9 determines the activation of monitoring of different frequencies, and outputs a message of activation of monitoring of different frequencies for the mobile station B6 to the modulating part F5.

The control part F3 is configured by a computer. That is, the control part F3 is configured to read the control program written in the memory of the computer with the CPU of the computer, and execute the function of the reception quality comparing part F7 and the different frequency monitoring activation determining part F9 with the CPU. The control part F3 also has a function of comprehensively controlling the execution of the overall processes performed in the base station control apparatus B7, in addition to the function of the reception quality comparing part F7 and the different frequency monitoring activation determining part F9.

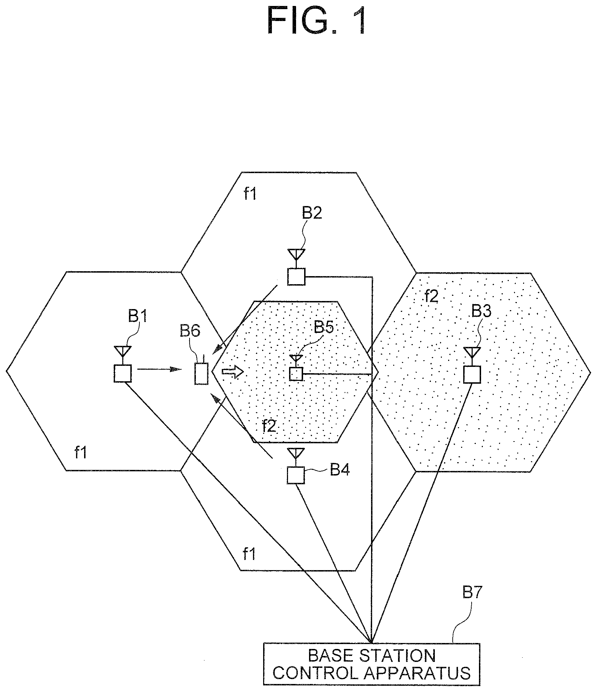

The different frequency monitoring activation method of CDMA mobile communication system will now be described based on Figs. 1 to 5.

In the CDMA mobile communication system, the base stations B1, B2, B3, B4, and B5 having service areas (cells) that allow transmission and reception of radio wave signals etc. are dispersed and arranged at a plurality of spots with the adjacent service areas close to each other, as shown in Fig. 1, and the mobile station (portable telephone etc.) B6 appropriately switches the base stations B1 to B6 to use for communication while moving.

In the example shown in Fig. 1, the mobile station B6 can receive communication (service) at frequency f1 with respect to the base stations B1, B2, and B4. The mobile station B6 can receive communication (service) at frequency f2 with respect to the base stations B3, B5. In this case, the mobile station B6 moves from the service area of the base station B1 towards the service area of the base station B5.

In this case, the mobile station B6 moves away from the base station B1, and moves closer to the base stations B2, B4. However, the base station that the mobile station B6 tends to move the closest to is the base station B5, and best communication quality is obtained when the mobile station B6 hands off at the time of switching from the service area of the base station B1 to the service area of the base station B5 under the control of the base station control apparatus B7.

As described above, the mobile station B6 moves towards the service area of the base station B5 while communicating with the base station B1 at frequency f1 in the service area of the base station B1.

The level measuring part A7 measures the field intensity of the radio wave received by the mobile station B6, and compares the level of the field intensity and the threshold value. The level measuring part A7 determines that communication quality between the mobile station B6 and the base station is degrading when the level of the field intensity is below the threshold value.

The BLER calculating part A8 measures the reception quality level of the radio wave from the base station, and compares the extent of the reception quality level and the threshold value. The BLER calculating part A8 determines that communication quality is degrading when the extent of the reception quality level is below the threshold value.

If both the level measuring part A7 and the BLER calculating part A8 respectively determines that the field intensity or the reception quality level of the communication quality information is below the threshold value, the control part A3 outputs a request to switch the communication frequency to the base station based on the determination result. The request to switch the communication frequency includes various information such as information on the field intensity measured by the level measuring part A7 and the determination result of the level measuring part A7, and information on the reception quality level of the radio wave measured by the BLER calculating part A8 and the determination result of the BLER calculating part A8, and such information are output from the mobile station B6 to the base station B5.

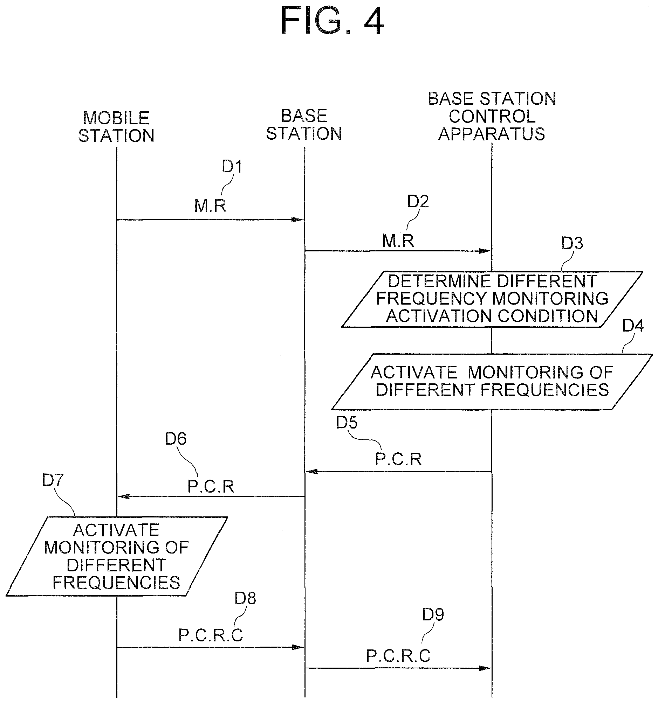

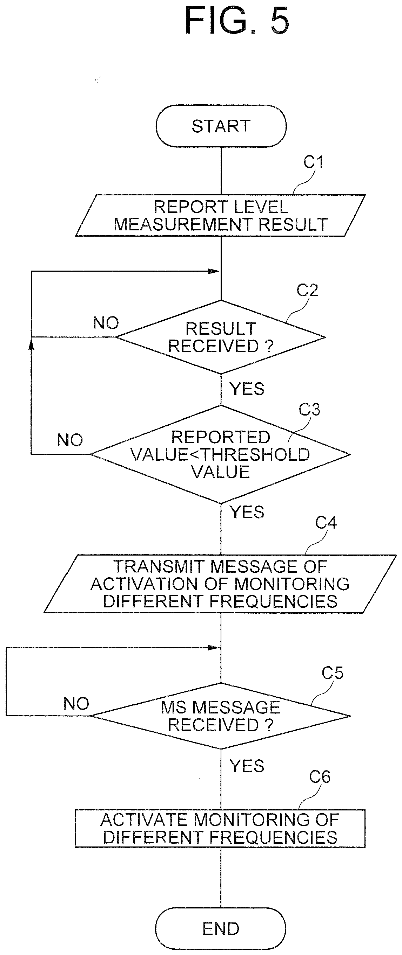

Specifically explaining, when receiving the information signal (containing communication frequency switching request signal) from the control part A3, the modulating part A5 modulates the signal and outputs the modulated signal to the transmitting part A6. In receiving the modulated signal from the modulating part A5, the transmitting part A6 up converts the frequency of the signal and transmits the communication frequency switching request (MR, Measurement Report) towards the base station from the antenna At towards the base station B1 in step D1 of Fig. 4. When receiving the MR information from the mobile station B6, the base station B1 outputs the MR information to the base station control apparatus B7 in step D2 of Fig. 4 and step C1 of Fig. 5.

The base station control apparatus B7 receives the radio wave from the base station B1 through the antenna At, and monitors whether or not the communication frequency switching request from the mobile station B6 issued from the mobile station B6 is input via the base station (step C2 of Fig. 5: NO). If the communication frequency switching request is input from the mobile station B6 (step C2 of Fig. 5: YES), the base station control apparatus B7 sends the message of activation of monitoring of different frequencies to the mobile station B6 via the base station in response to the communication frequency switching request. This will be specifically described below.

The receiving part F1 of the base station control apparatus B7 down converts the frequency of the reception signal received through the antenna At, and outputs the down converted reception signal to the demodulating part F2. The demodulating part F2 demodulates the down converted reception signal and outputs the demodulated signal to the control part F3.

The control part F3 receives the demodulated signal from the demodulating part F2, and determines whether or not the demodulated signal contains the communication frequency switching request signal from the mobile station (step C2 of Fig. 5; NO). If the communication frequency switching request signal is contained (step C2 of Fig. 5: YES), the control part F3 outputs the communication frequency switching request signal to the different frequency monitoring activation determining part F9.

The different frequency monitoring activation determining part F9 receives the communication frequency switching request signal from the control part F3, and determines whether or not the communication quality information contained in the frequency switching request signal is below the threshold value for activation of monitoring of different frequencies in step D4 of Fig. 4 and step C3 of Fig. 5 (step C3 of Fig. 5: NO). If determined that the communication quality information is below the threshold value in step C3 of Fig. 5 (step C3 of Fig. 5: YES), the different frequency monitoring activation determining part F9 determines the activation of monitoring of different frequencies (step D4 of Fig. 4) and outputs the signal thereof to the control part F3.

In receiving the signal of activation of monitoring of different frequencies from the different frequency monitoring activation determining part F9, the control part F3 outputs the message of activation of monitoring of different frequencies for the mobile station B6 to the modulating part F5 in step D5 of Fig. 4 and step C4 of Fig. 5.

The modulating part F5 of the base station control apparatus B7 modulates the signal of the message of activation of monitoring of different frequencies received from the control part F3, and outputs the modulated signal to the transmitting part F6. The transmitting part F6 emits the modulated message of activation of monitoring of different frequencies (PCR: Physical Channel Reconfiguration) towards the base station B1 from the antenna At in step D4 of Fig. 4 and step C4 of Fig. 5. When receiving the message (PCR) of activation of monitoring of different frequencies from the base station control apparatus B7, the base station B1 transmits the signal thereof towards the mobile station B6 in step D6 of Fig. 4.

The control part A3 of the mobile station B6 transmits a notification that PCR has been received to the base station control apparatus B7 via the base station B1 when receiving the PCR from the base station B1.

The control part F3 of the base station control apparatus B7 monitors whether or not the mobile station B6 has received the PCR after transmitting the PCR in step C5 of Fig. 5 (step C5 of Fig. 5: NO). In receiving the notification that PCR has been received from the mobile station B6, the control part F3 of the base station control apparatus B7 activates the different frequency monitoring function and proceeds the process to the different frequency monitoring mode in step C6 of Fig. 5. The control part F3 then outputs the frequency switching signal to the local oscillator Oc. In response to receiving the frequency switching signal, the local oscillator Oc switches the frequency used in transmission and reception to the frequency the mobile station B6 is going to switch to, that is, frequency f2 in the example of Fig. 1.

In step D7 of Fig. 4, the mobile station B6 activates the different frequency monitoring function for switching the communication frequency to maintain the communication quality level with the reception of the PCR from the base station control apparatus B7 as the trigger signal, proceeds the process to the different frequency monitoring mode, and switches the communication frequency.

Specifically explaining, when receiving the message (PCR) of activation of monitoring of different frequencies from the base station control apparatus B7 via the base station B1, the control part A3 of the mobile station B6 activates the different frequency monitoring function, and proceeds the process to the different frequency monitoring mode of switching the frequency used in communicating with the base station B5 from frequency f1 to frequency f2.

In such mode, the control part F3 outputs the frequency switching signal to the frequency switching control part A4. The frequency switching control part A4 outputs the frequency switching signal to the local oscillator Oc, so that the local oscillator Oc switches the communication frequency of the mobile station B6 to the frequency f2 of the base station B5. The hand-off on the mobile station B6 side is executed according to such series of operations.

When the mobile station B6 executes hand-off, since the distance to the base station B5 is the shortest for the mobile station B6 in the case shown in Fig. 1 and the level of field intensity of the received radio wave from the base station B5 is at the highest level, the mobile station B6 switches the frequency to frequency f2 and executes hand-off to the base station B5 in such detection (search). When the activation of monitoring of different frequencies is completed, the mobile station B6 transmits a physical channel change completion signal (PCRC; Physical Channel Reconfiguration Complete) notifying the completion of activation of monitoring of different frequencies to the base station B5 in step D8 of Fig. 4.

The base station B5 transfers the PCR signal to the base station control apparatus B7 when receiving the PCR signal in step D9 of Fig. 4. The base station control apparatus B7 recognizes that the mobile station B6 has executed hand-off from the base station B1 to the base station B5 when receiving the PCR signal from the base station B5.

The mobile station B6 outputs the communication frequency switching request signal to the base station control apparatus B7 via the base station when the field intensity and the reception quality level are lower than the threshold value, and switches the communication frequency under the control of the base station control apparatus B7.

Therefore, the monitoring of different frequencies can be activated corresponding to the reception state at the mobile station since the monitoring of different frequencies starts based on the communication quality information measured in the mobile station B6. Furthermore, determination of communication frequency switching is made in the mobile station B6, and the monitoring of different frequencies is started based on such determination, whereby unnecessary monitoring of different frequencies can be reduced.

In the above description, the mobile station B6 judges the frequency switching of the communication performed with the base station based on the communication quality information, notifies the same to the base station control apparatus, and switches the communication frequency, but is not limited thereto. That is, the mobile station B6 may transmit the radio wave intensity information measured in the level measuring part A7 and the reception quality level information measured in the BLER calculating part A8 to the base station control apparatus B7 without determining switching of the communication frequency, so that the base station control apparatus B7 may determine the switching of the communication frequency.

In this case, the control part F3 receives information on the field intensity and the reception quality level from the mobile station B6, and outputs the information to the reception quality comparing part F7.

The reception quality comparing part F7 compares the data of field intensity and the reception quality level with the threshold value.

If the data is above the threshold value in step D3 of Fig. 4 (step C3 of Fig. 5), the reception quality comparing part F7 outputs the comparison result to the control part F3. The control part F3 continues to receive the MR information from the base station B1 when receiving the comparison result that the level of the data is above the threshold value from the reception quality comparing part F7 (step C3 of Fig. 5; NO).

If the level of the data is below the threshold value in step D3 of Fig. 4 (step C3 of Fig. 5), the reception quality comparing part F7 outputs the determination result to the different frequency monitoring activation determining part F9. In response to the determination result from the reception quality comparing part F7, the different frequency monitoring activation determining part F9 determines the activation of monitoring of different frequencies in step D4 of Fig. 4, and outputs the signal thereof to the control part F3 (step C3 of Fig. 5; YES). The control part F3 outputs the message of activation of monitoring of different frequencies for the mobile station B6 to the modulating part F5 when receiving the signal of activation of monitoring of different frequencies from the different frequency monitoring activation determining part F9.

The modulating part F5 of the base station control apparatus B7 modulates the signal of the message of activation of monitoring of different frequencies received from the control part F3, and outputs the modulated signal to the transmitting part F6. The transmitting part F6 emits the modulated message (PCR; Physical Channel Reconfiguration) of activation of monitoring of different frequencies towards the base station B1 from the antenna At in step D4 of Fig. 4 (step C4 of Fig. 5). When receiving the message PCR information of activation of monitoring of different frequencies from the base station control apparatus B7, the base station B1 transmits the signal thereof towards the mobile station B6 in step D6 of Fig. 4.

After receiving the PCR from the base station B1, the control part A3 of the mobile station B6 transmits the notification of reception to the base station control apparatus B7 via the base station B1. The base station control apparatus B7 monitors whether or not the mobile station B6 has received the PCR after transmitting the PCR in step C5 of Fig. 5.

In step D7 of Fig. 4, the mobile station B6 activates the different frequency monitoring function for switching the communication frequency to maintain the communication quality level with the reception of the PCR from the base station control apparatus B7 as the trigger signal, and switches the frequency used in communication with the base station B5 from frequency f1 to frequency f2 to execute hand-off.

Since determination of communication frequency switching is made based on the communication quality information measured in the mobile station B6 in the above case, the activation of monitoring of different frequencies can be performed corresponding to the state on the mobile station B6 side and communication of satisfactory quality constantly continues, and furthermore, activation of unnecessary frequency monitoring can be reduced. As activation of monitoring of different frequencies is performed based on the information of the mobile station B6, case of call disconnection can be reduced.

### (embodiment)

A different frequency monitoring activation apparatus of CDMA mobile communication system according to a second embodiment of the present invention will now be described.

In the embodiment of the present invention, event judgment is made in the mobile station based on the quality information, and determination of frequency switching is made in the base station control apparatus that controls the base station and the mobile station based on the judged event information. This will be specifically described below.

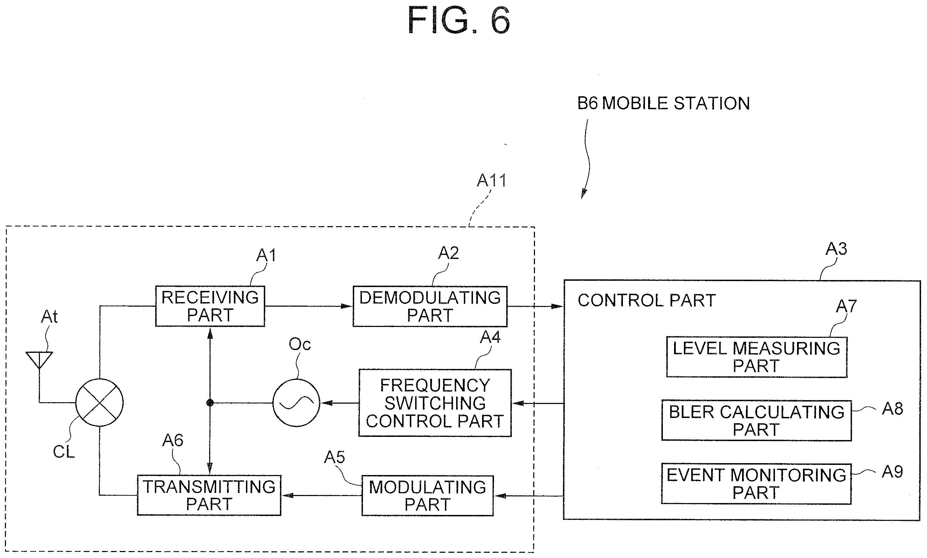

As shown in Fig. 6, the control part A3 in the different frequency monitoring activation apparatus according to the present embodiment is adapted to perform event judgment based on the communication quality information measured in the mobile station B6, and transmit the event information to the base station control apparatus via the base station. Specifically, the control part A3 of the mobile station B6 includes an event monitoring part A9 in addition to the level measuring part A7 and the BLER calculating part A8.

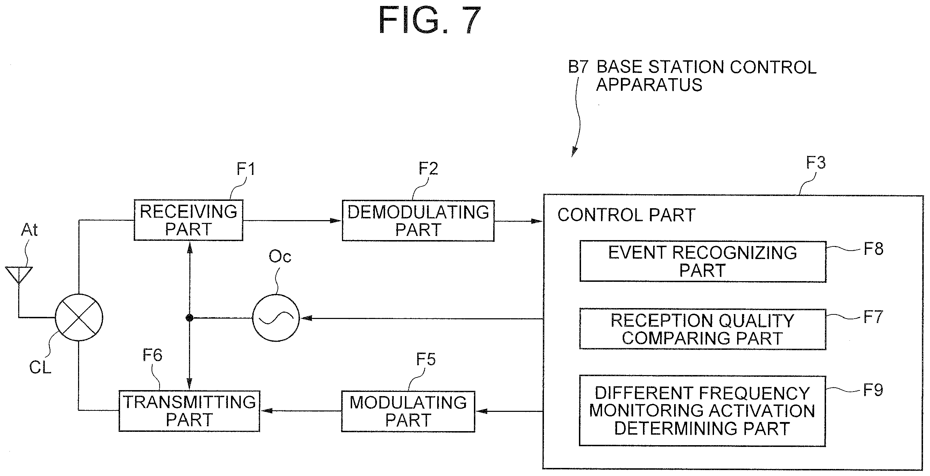

As shown in Fig. 7, the base station control apparatus B7 is adapted to determine switching of frequencies of the communication performed between the mobile station B6 and the base station control apparatus B7 based on the event information transmitted from the mobile station B6. Specifically, the base station control apparatus B7 includes an event recognizing part F8 in addition to the reception quality comparing part F7 and the different frequency monitoring activation determining part F9, as shown in Fig. 7.

The physical channel used in the CDMA mobile communication system will now be described. The physical channel includes DPCH, DPCCH, PRACH, PCPCH, CPICH, P-CCPCH, S-CCPCH, SCH, PDSCH, and AICH.

DPCH (Dedicated Physical Channel) is a channel for both upward and downward directions, and is a channel that is individually assigned to the mobile station. DPCCH (Dedicated Physical Control channel) is a channel that is assigned by one or more to the mobile station using DPCH. PRACH (Physical Random Access Channel) is a common channel in the upward direction. PCPCH (Physical Common Packet Channel) is a common channel in the upward direction. CPICH (Common Pilot channel) is a common channel in the downward direction. P-CCPCH (Primary Common Control Physical Channel) is a common channel in the downward direction and is a channel that is provided one for each cell (service area). S-CCPCH (Secondary Common Control Physical Channel) is a common channel in the downward direction, and is a channel that exists in plurals for each cell (service area). SCH (Synchronization Channel) is a channel in the downward direction. PDSCH (Physical Downlink Shared Channel) is a common channel in the downward direction and is a channel that can exist in plurals for each cell (service area). AICH (Acquisition Indication Channel) is a common channel in the downward direction, and is a channel that exists in pairs with the PRACH.

When event occurs and the communication quality degrades during the communication between the mobile station B6 and the base station, the level of the CPICH lowers among the physical channels. That is, occurrence of event and lowering in the level of the CPICH are related.

In the embodiment of the present invention, the control part A3 of the mobile station B6 performs event judgment based on the communication quality information measured in the mobile station B6, and transmits the event information to the base station control apparatus via the base station, as shown in Fig. 6. As shown in Fig. 7, the control part F3 of the base station control apparatus B7 determines frequency switching of the communication performed between the mobile station B6 and the base station control apparatus B7 based on the event information transmitted from the mobile station B6. This will be specifically described below.

The level measuring part A7 of the mobile station B6 is adapted to measure the field intensity of the radio wave received through the antenna At, and compares the level of the field intensity and the threshold value. The level measuring part A7 determines that communication quality between the mobile station B6 and the base station is degrading when the level of the field intensity is below the threshold value.

The BLER calculating part A8 is adapted to measure the reception quality level of the radio wave from the base station, and compares the extent of the reception quality level and the threshold value. The BLER calculating part A8 determines that communication quality is degrading when the extent of the reception quality level is below the threshold value.

If both the level measuring part A7 and the BLER calculating part A8 respectively determines that the field intensity or the reception quality level of the communication quality information is below the threshold value, the event recognizing part F8 of the base station B7 compares the level of CPICH among the physical channels with the threshold value based on the determined result, as shown in Fig. 7. If the level of CPICH is below the threshold value, the event recognizing part F8 outputs information indicating that event has occurred in the communication performed between the mobile station and the base station.

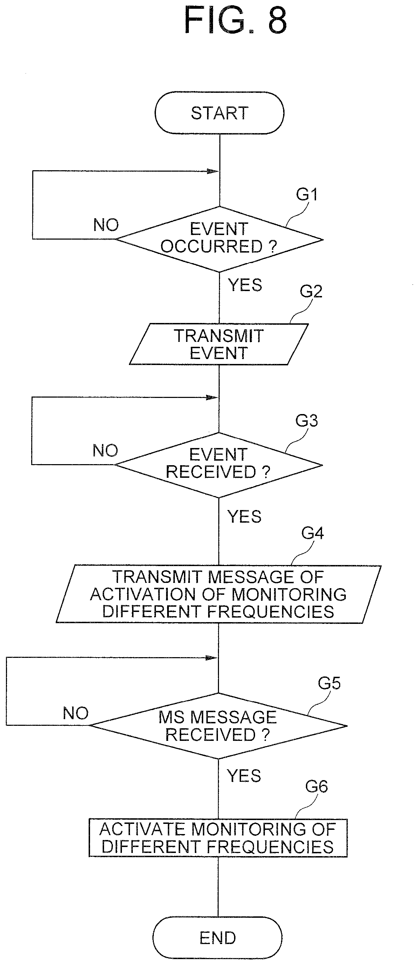

When receiving information of the field intensity measured in the level measuring part A7 and the determination result of the level measuring part A7, the reception quality level information of the radio wave measured in the BLER calculating part A8 and the determination result of the BLER calculating part A8, and the event information of the event recognizing part F8 in step G1 of Fig. 8, the control part A3 of the mobile station B6 determines that event has occurred (step G1 of Fig. 8; YES) and outputs the event occurrence information towards the base station B5.

Specifically explaining, when receiving the event occurrence information from the control part A3, the modulating part A5 modulates the signal thereof, and outputs the modulated signal to the transmitting part A6. In receiving the modulated signal from the modulating part A5, the transmitting part A6 up converts the frequency of the signal and transmits the signal (MR, Measurement Report) including the event occurrence information towards the base station B5 from the antenna At to the base station B1 in step D1 of Fig. 4. When receiving the MR information from the mobile station B6, the base station B1 outputs the MR information to the base station control apparatus B7 in step D2 of Fig. 4 and step G2 of Fig. 8.

The base station control apparatus B7 receives radio wave from the base station B1 through the antenna At, and monitors whether or not the event information from the mobile station B6 issued from the mobile station B6 is input via the base station (step G3 of Fig. 8: NO). If the event information is input from the mobile station B6 (step G3 of Fig. 8: YES), the base station control apparatus B7 sends the message of activation of monitoring of different frequencies to the mobile station B6 via the base station in response to the event occurrence information. This will be specifically described below.

The receiving part F1 of the base station control apparatus B7 down converts the frequency of the reception signal received through the antenna At, and outputs the down converted reception signal to the demodulating part F2. The demodulating part F2 demodulates the down converted reception signal and outputs the demodulated signal to the control part F3.

The control part F3 receives the demodulated signal from the demodulating part F2, and determines whether or not the demodulated signal contains event occurrence information from the mobile station (step G3 of Fig. 8; NO). If the event occurrence information is contained (step G3 of Fig. 8: YES), the control part F3 outputs the event occurrence information to the different frequency monitoring activation determining part F9.

The different frequency monitoring activation determining part F9 receives the event occurrence information from the control part F3 in step D4 of Fig. 4 and step G3 of Fig. 8, and determines whether or not the communication quality information sent with the even information is below the threshold value for activation of monitoring of different frequencies (step G3 of Fig. 8: NO). If determined that the communication quality information is below the threshold value in step G3 of Fig. 8 (step G3 of Fig. 8: YES), the different frequency monitoring activation determining part F9 determines the activation of monitoring of different frequencies (step D4 of Fig. 4) and outputs the signal thereof to the control part F3.

In receiving the signal of activation of monitoring of different frequencies from the different frequency monitoring activation determining part F9, the control part F3 outputs the message of activation of monitoring of different frequencies for the mobile station B6 to the modulating part F5 in step D5 of Fig. 4 and step G4 of Fig. 8.

The modulating part F5 of the base station control apparatus B7 modulates the signal of the message of activation of monitoring of different frequencies received from the control part F3, and outputs the modulated signal to the transmitting part F6. The transmitting part F6 emits the modulated message of activation of monitoring of different frequencies (PCR: Physical Channel Reconfiguration) towards the base station B1 from the antenna At in step D4 of Fig. 4 and step G4 of Fig. 8. When receiving the message (PCR) of activation of monitoring of different frequencies from the base station control apparatus B7, the base station B1 transmits the signal thereof towards the mobile station B6 in step D6 of Fig. 4.

The control part A3 of the mobile station B6 transmits a notification that PCR has been received to the base station control apparatus B7 via the base station B1 when receiving the PCR from the base station B1.

The control part F3 of the base station control apparatus B7 monitors whether or not the mobile station B6 has received the PCR after transmitting the PCR in step G5 of Fig. 8 (step G5 of Fig. 8: NO). In receiving the notification that PCR has been received from the mobile station B6, the control part F3 of the base station control apparatus B7 activates the different frequency monitoring function and proceeds the process to the different frequency monitoring mode in step G6 of Fig. 8. The control part F3 then outputs the frequency switching signal to the local oscillator Oc. In response to receiving the frequency switching signal, the local oscillator Oc switches the frequency used in transmission and reception to the frequency the mobile station B6 is going to switch to, that is, frequency f2 in the example of Fig. 1.

In step D7 of Fig. 4, the mobile station B6 activates the different frequency monitoring function for switching the communication frequency to maintain the communication quality level with the reception of the PCR from the base station control apparatus B7 as the trigger signal, proceeds the process to the different frequency monitoring mode, and switches the communication frequency.

Specifically explaining, when receiving the message (PCR) of activation of monitoring of different frequencies from the base station control apparatus B7 via the base station B1, the control part A3 of the mobile station B6 activates the different frequency monitoring function, and proceeds the process to the different frequency monitoring mode of switching the frequency to use in communicating with the base station B5 from frequency f1 to frequency f2.

In such mode, the control part F3 outputs the frequency switching signal to the frequency switching control part A4. The frequency switching control part A4 outputs the frequency switching signal to the local oscillator Oc, so that the local oscillator Oc switches the communication frequency of the mobile station B6 to the frequency f2 of the base station B5. The hand-off on the mobile station B6 side is executed according to such series of operations.

When the mobile station B6 executes hand-off, since the distance to the base station B5 is the shortest for the mobile station B6 in the case shown in Fig. 1 and the level of field intensity of the received radio wave from the base station B5 is at the highest level, the mobile station B6 switches the frequency to the frequency f2 to hand-off to the base station B5 in such detection (search). When the activation of monitoring of different frequencies is completed, the mobile station B6 transmits a physical channel change completion signal (PCRC; Physical Channel Reconfiguration Complete) notifying the completion of activation of monitoring of different frequencies to the base station B5 in step D8 of Fig. 4.

The base station B5 transfers the PCR signal to the base station control apparatus B7 at the time of receiving the PCR signal in step D9 of Fig. 4. The base station control apparatus B7 recognizes that the mobile station B6 has executed hand-off from the base station B1 to the base station B5 at the time of receiving the PCR signal from the base station B5.

In the present embodiment, the mobile station B6 switches the communication frequency under the control of the base station control apparatus B7 when communication quality becomes lower than the threshold value and the event has occurred.

Therefore, monitoring of different frequencies can be performed corresponding to the reception state at the mobile station by performing the event judgment on the mobile station side based on the communication quality information, and starting the monitoring of different frequencies based on the event information.

According to the present invention, monitoring of different frequencies can be activated corresponding to the reception state at the mobile station since monitoring of different frequencies starts based on the communication quality information measured in the mobile station, as described above.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

This application is based upon and claims the benefit of priority from Japanese patent application No.2005-067967, filed on March 10, 2005.

## Claims

1. A frequency monitoring method in a mobile communication system for monitoring a communication performed between a mobile station (B6) and a base station by switching frequencies, the system comprising the mobile station (B6), the base station, and a base station control apparatus (B7), wherein
the mobile station is configured
to determine that a quality of the communication performed between the mobile station (B6)and the base station is degrading by measuring a level of a field intensity of the communication; and
to determine that the quality of the communication performed between the mobile station and the base station is degrading by calculating a Block Error Ratio, BLER, based on a measured reception quality level of a radio wave from the base station;
to compare - when determining, that the field intensity and the reception quality level of the communication quality information are below a first and second threshold values respectively - a level of CPICH among the physical channels with a third threshold value, and
output - when the level of CPICH is below the third threshold value - event occurrence information toward the base station control apparatus, indicating that an event has occurred,
the base station control apparatus is configured
to determine - on receipt of the event occurrence information - frequency switching of the communication performed between the mobile station and the base station, and
to send a message of activation of monitoring of different frequencies to the mobile station via the base station.

2. A mobile communication system for monitoring a communication performed between a mobile station (B6) and a base station by switching frequencies, the system comprising the mobile station (B6), the base station, and a base station control apparatus (B7), wherein
the mobile station (B6) comprises:
a level measuring part (A7) configured to determine that a quality of the communication performed between the mobile station and the base station is degrading by measuring a level of a field intensity of the communication; and
a Block Error Ratio, BLER, calculating part (A8) configured to determine that the quality of the communication performed between the mobile station and the base station is degrading by calculating a BLER based on a measured reception quality level of a radio wave from the base station, wherein the mobile station is further configured
to compare - when both of the level measuring part (A7) and the BLER calculating part (A8) determine that the field intensity and the reception quality level of the communication quality information are below a first and second threshold values respectively - a level of CPICH among the physical channels with a third threshold value, and
output - when the level of CPICH is below the third threshold value - event occurrence information toward the base station control apparatus, indicating that an event has occurred,
the base station control apparatus (B7) is configured
to determine - on receipt of the event occurrence information - frequency switching of the communication performed between the mobile station and the base station, and
to send a message of activation of monitoring of different frequencies to the mobile station (B6) via the base station.

## Patentansprüche

1. Frequenzüberwachungsverfahren in einem Mobilkommunikationssystem zum Überwachen einer Kommunikation, die zwischen einer Mobilstation (B6) und einer Basisstation durch Umschalten von Frequenzen ausgeführt wird, wobei das System die Mobilstation (B6), die Basisstation und eine Basisstationssteuereinrichtung (B7) aufweist,
wobei die Mobilstation dafür konfiguriert ist,
durch Messen eines Pegels einer Feldintensität der Kommunikation zu bestimmen, dass sich die Qualität der zwischen der Mobilstation (B6) und der Basisstation ausgeführten Kommunikation verschlechtert; und
durch Berechnen einer Blockfehlerquote BLER basierend auf einem gemessenen Empfangsqualitätspegel einer Funkwelle von der Basisstation zu bestimmen, dass sich die Qualität der zwischen der Mobilstation und der Basisstation ausgeführten Kommunikation verschlechtert;
wenn bestimmt wird, dass die Feldintensität und der Empfangsqualitätspegel der Kommunikationsqualitätsinformation unterhalb eines ersten bzw. eines zweiten Schwellenwerts liegen, einen Pegel eines CPICH unter den physikalischen Kanälen mit einem dritten Schwellenwert zu vergleichen; und
wenn der Pegel des CPICH unterhalb des dritten Schwellwerts liegt, Information über das Auftreten eines Ereignisses, die anzeigt, dass ein Ereignis aufgetreten ist, an die Basisstationssteuereinrichtung auszugeben;
wobei die Basisstationssteuereinrichtung dafür konfiguriert ist,
beim Empfang der Information über das Auftreten eines Ereignisses einen Frequenzschaltvorgang der zwischen der Mobilstation und der Basisstation ausgeführten Kommunikation zu bestimmen; und
eine Nachricht über die Aktivierung einer Überwachung verschiedener Frequenzen über die Basisstation an die Mobilstation zu übertragen.

2. Mobilkommunikationssystem zum Überwachen einer Kommunikation, die zwischen einer Mobilstation (B6) und einer Basisstation durch Umschalten von Frequenzen ausgeführt wird, wobei das System die Mobilstation (B6), die Basisstation und eine Basisstationssteuereinrichtung (B7) aufweist,
wobei die Mobilstation (B6) aufweist:
einen Pegelmessabschnitt (A7), der dafür konfiguriert ist, durch Messen eines Pegels einer Feldintensität der Kommunikation zu bestimmen, dass sich eine Qualität der zwischen der Mobilstation und der Basisstation ausgeführten Kommunikation verschlechtert; und
einen Blockfehlerquoten-, BLER, Berechnungsabschnitt (A8), der dafür konfiguriert ist, durch Berechnen einer BLER basierend auf einem gemessenen Empfangsqualitätspegel einer Funkwelle von der Basisstation zu bestimmen, dass die Qualität der zwischen der Mobilstation und der Basisstation ausgeführten Kommunikation abnimmt,
wobei die Mobilstation ferner dafür konfiguriert ist,
wenn sowohl der Pegelmessabschnitt (A7) als auch der BLER-Berechnungsabschnitt (A8) bestimmen, dass die Feldintensität und der Empfangsqualitätspegel der Kommunikationsqualitätsinformation unterhalb eines ersten bzw. eines zweiten Schwellenwerts liegen, einen Pegel eines CPICH unter den physikalischen Kanälen mit einem dritten Schwellenwert zu vergleichen; und
wenn der Pegel des CPICH unterhalb des dritten Schwellenwerts liegt, Information über das Auftreten eines Ereignisses, die anzeigt, dass ein Ereignis aufgetreten ist, an die Basisstationssteuereinrichtung auszugeben,
wobei die Basisstationssteuereinrichtung (B7) dafür konfiguriert ist,
beim Empfang der Information über das Auftreten eines Ereignisses einen Frequenzschaltvorgang der zwischen der Mobilstation und der Basisstation ausgeführten Kommunikation zu bestimmen, und
eine Nachricht über die Aktivierung einer Überwachung verschiedener Frequenzen über die Basisstation an die Mobilstation (B6) zu übertragen.

## Revendications

1. Procédé de surveillance de fréquence dans un système de communication mobile pour surveiller une communication effectuée entre une station mobile (B6) et une station de base en commutant des fréquences, le système comprenant la station mobile (B6), la station de base, et un appareil de commande de station de base (B7), dans lequel
la station mobile est configurée
pour déterminer qu'une qualité de la communication effectuée entre la station mobile (B6) et la station de base se dégrade en mesurant un niveau d'une intensité de champ de la communication ; et
pour déterminer que la qualité de la communication effectuée entre la station mobile et la station de base se dégrade en calculant un Taux d'Erreur sur les Blocs, BLER, sur la base d'un niveau de qualité de réception mesuré d'une onde radio en provenance de la station de base ;
pour comparer - lors de la détermination que l'intensité de champ et le niveau de qualité de réception des informations de qualité de communication sont en dessous de première et deuxième valeurs de seuil respectivement - un niveau de CPICH parmi les canaux physiques avec une troisième valeur de seuil, et
sortir - lorsque le niveau de CPICH est en dessous de la troisième valeur de seuil - des informations de survenue d'événement vers l'appareil de commande de station de base, indiquant qu'un événement est survenu,
l'appareil de commande de station de base est configuré
pour déterminer - lors de la réception des informations de survenue d'événement - une commutation de fréquence de la communication effectuée entre la station mobile et la station de base, et
pour envoyer un message d'activation de surveillance de différentes fréquences à la station mobile via la station de base.

2. Système de communication mobile pour surveiller une communication effectuée entre une station mobile (B6) et une station de base en commutant des fréquences, le système comprenant la station mobile (B6), la station de base, et un appareil de commande de station de base (B7), dans lequel
la station mobile (B6) comprend :
une partie de mesure de niveau (A7) configurée pour déterminer qu'une qualité de la communication effectuée entre la station mobile et la station de base se dégrade en mesurant un niveau d'une intensité de champ de la communication ; et
une partie de calcul de Taux d'Erreur sur les Blocs, BLER, (A8) configurée pour déterminer que la qualité de la communication effectuée entre la station mobile et la station de base se dégrade en calculant un BLER sur la base d'un niveau de qualité de réception mesuré d'une onde radio en provenance de la station de base, dans lequel la station mobile est en outre configurée
pour comparer - lorsqu'à la fois la partie de mesure de niveau (A7) et la partie de calcul de BLER (A8) déterminent que l'intensité de champ et le niveau de qualité de réception des informations de qualité de communication sont en dessous de première et deuxième valeurs de seuil respectivement - un niveau de CPICH parmi les canaux physiques avec une troisième valeur de seuil, et
sortir - lorsque le niveau de CPICH est en dessous de la troisième valeur de seuil - des informations de survenue d'événement vers l'appareil de commande de station de base, indiquant qu'un événement est survenu,
l'appareil de commande de station de base (B7) est configuré
pour déterminer - lors de la réception des informations de survenue d'événement - une commutation de fréquence de la communication effectuée entre la station mobile et la station de base, et
pour envoyer un message d'activation de surveillance de différentes fréquences à la station mobile (B6) via la station de base.
